Europäisches Patentamt

European Patent Office

Office européen des brevets

(11) Publication number: **0 145 431**
A2

# EUROPEAN PATENT APPLICATION

(21) Application number: **84308377.5**

(22) Date of filing: **03.12.84**

(51) Int. Cl.⁴: **B 62 M 13/04**

(30) Priority: **08.12.83 GB 8332849**

(43) Date of publication of application: **19.06.85**
Bulletin 85/25

(84) Designated Contracting States: **AT CH DE FR GB IT LI NL**

(71) Applicant: **Searle, Russell John, Thames Street, Sunbury-on-Thames Middlesex TW16 5QP (GB)**

(72) Inventor: **Searle, Russell John, Thames Street, Sunbury-on-Thames Middlesex TW16 5QP (GB)**

(74) Representative: **Walter, Douglas Ernest et al, HASELTINE LAKE & CO. 28, Southampton Buildings, London WC2A 1AT (GB)**

(54) **Vehicle drive.**

(57) A vehicle drive for a bicycle or other land vehicle comprises a relatively low-powered internal combustion engine or electric motor (1) whose rotary output shaft (4) is helically splined or keyed to carry an externally ribbed conically shaped drive cone (5) formed with an axially extending bore (6) that is internally splined or keyed to match the splines or keys of the shaft (4) which it surrounds. A helical compression spring (7) or other resilient means bears between the larger diameter end of the drive cone (5) and a collar which rotatably surrounds the drive shaft (4) but that is substantially axially immovable relative to that shaft. In use, the drive cone (5) drivingly engages the side wall of the tyre (3) of a wheel (2) of the bicycle or other land vehicle and the spring (7) or other resilient means tends to maintain the drive cone (5) in such a position on the shaft (4) that a larger diameter region thereof is in actual driving contact with the side wall of the tyre (3). The motor (1), shaft (4) and drive cone (5) are bodily displaceable about a pivot (9) by spring means (10) to tend to maintain the drive cone (5) in continuous contact with the side wall of the tyre (3). When, during use, resistance to rotation of the wheel (2) and thus the drive shaft (4) increases, the greater driving torque will cause the cone (5) to wind helically around the shaft (4) in a direction opposite to its direction of driving rotation thus axially displacing it along the shaft (4) to bring a smaller diameter region thereof into driving contact with the tyre (3). The transmission ratio is thus automatically varied to suit the resistance to rotation of the wheel (2) and, when that resistance is lowered, the spring (7) or other resilient means tends to restore the drive cone (5) to a "higher gear" position on the shaft (4). The variation in transmission ratio is entirely independent of any action by the rider or operator of the vehicle.

ACTORUM AG

VEHICLE DRIVE

This invention relates to the driving of land vehicles, such as bicycles, invalid chairs, golf trolleys and industrial vehicles, by a motor which can either provide all of the required propulsive force or which sometimes drives the vehicle alone but which, at other times, merely assists the effort of, for example, a pedalling rider or a pushing or pulling pedestrian operator.

Constructions in which a low-powered motor transmits drive to a road or ground wheel of a bicycle or other vehicle by the contact of a drive roller or the like with the tyre of that road or ground wheel have been well known for a long time and some proposals, of which GB 189043A is a good example, describe means by which a power-assisted bicycle rider can, when he/she considers it necessary, "change gear" by moving a control to alter the transmission ratio between the output of the motor and the road or ground wheel which it is driving. This "gear changing" operation can present a safety hazard, inasmuch as the rider usually has to let go of one handlebar handgrip to effect it, and the control arrangements are usually heavy and subject to wear, breakage and loss of correct adjustment. Accordingly, an object of the present invention is to provide a vehicle drive of the kind discussed above in which the transmission ratio can be varied independently of the rider or operator of the vehicle.

According to the invention, there is provided a land vehicle drive of the kind in which a motor carried by a vehicle to which the drive is fitted is operatively connected to a conically shaped drive member that makes contact, at least during use, with a tyre on a ground wheel of that vehicle or with a member coupled to that ground wheel, characterised in that said conically shaped drive member is displaceable along a drive shaft by which it is supported, against the opposition of resilient means, in such a way that the position of said drive member lengthwise along said drive shaft at any instant during operation determines the transmission ratio between that drive member and said vehicle ground wheel and is dependent upon the resistance to rotation of that drive shaft at substantially the same instant.

For a better understanding of the invention, and to show how the same may be carried into effect, reference will now be made, by way of example, to the accompanying drawings, in which:

Fig.1 is a partially diagrammatic perspective view of a motor arranged to propel, or assist the propulsion of, a bicycle, the motor being provided with a variable gear constructed in accordance with the invention,

Fig.2 is a plan view corresponding to Fig.1,

Fig.3 is a view as seen in the direction indicated by an arrow III in Fig.2,

Fig.4 is a somewhat diagrammatic plan view of an embodiment having a different construction and disposition to that of the embodiment of Figs. 1 to 3, and

Fig.5 is a diagrammatic view as seen in the direction indicated by an arrow V in Fig.4.

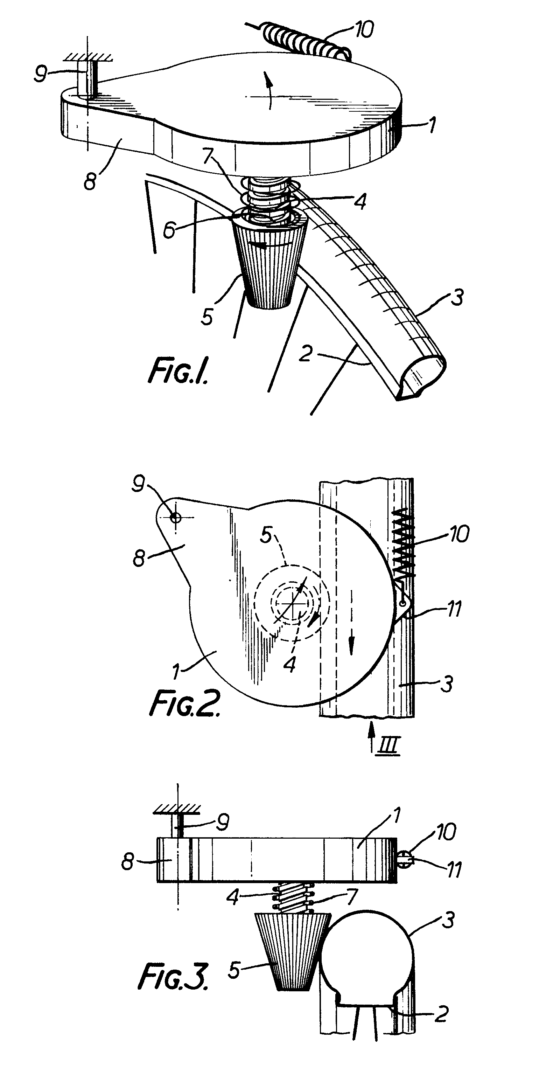

Referring firstly to Figs. 1 to 3 of the accompanying drawings, a motor 1 is shown only very diagrammatically since it may have any desired one of several different forms. The motor 1 could, purely for _xample, be a small internal combustion engine which burns petrol or other liquid fuel and might, again purely for example, have a cylinder capacity of 50 c.c. If it is an internal combustion engine, the motor 1 may be of substantially conventional fixed cylinder and reciprocating piston construction or it could be an engine of the general kind described and illustrated in GB 1511232A or GB 2027122B. Another possibility, in the light of recent advances in the construction of light-weight rechargeable batteries of relatively high electrical capacity is for the motor 1 to be an electric motor deriving its power from at least one such rechargeable battery.

In the example that is being described, the vehicle is a bicycle having a substantially conventional spoked wheel 2 provided with a pneumatic tyre 3. Appropriate controls for the motor 1 in the form of a throttle lever and an ignition earthing button or an on/off switch and a variable resistance or equivalent electronic control will be provided on the handlebars of the bicycle adjacent to one of its handgrips but these controls are not illustrated, and will not be further described, since they do not form the subject of the present invention.

In the case of a motor 1 in the form of an internal combustion engine, that motor 1 may be coupled to a power output shaft by way of a known centrifugally operated clutch mechanism (not shown) which becomes engaged only above a predetermined engine speed. Thus, the clutch is disengaged when the motor 1 is inoperative or merely "ticking over" and the motor can be started from rest by, for example, a known recoil starter without the vehicle being driven forwardly.

The motor 1, whatever its construction, has a rotary output shaft 4 that will normally be vertically or substantially vertically disposed when the bicycle is standing on horizontal ground but which could, depending upon the construction of the bicycle, be significantly inclined to the vertical when so required. The output shaft 4 is helically splined or at least keyed at a relatively steep pitch throughout all or most of the length thereof that protrudes from the body or casing of the motor 1 and is of such a length as to extend more or less radially inwardly towards the axis of rotation of the wheel 2 alongside the pneumatic tyre 3 and inwardly of the rim of that wheel 2 by a significant distance which might, for example, approximately correspond to the radial thickness of the pneumatic tyre 3.

The externally splined or keyed output shaft 4 carries a truncated drive cone 5 formed with an axially extending bore 6 whose diameter matches that of the motor output shaft 4 and which is internally helically splined or keyed to match the external helical splines or key/keys of the shaft 4. The cone 5 is thus movable lengthwise of the shaft 4 and is rotatable therearound to the extent dictated by the co-operation of the helical splines or keys. A helical compression spring 7 is wound around the splined or keyed shaft 4 so as to bear between the uppermost maximum diameter end of the drive cone 5, that is nearest to the motor 1, and a collar (not shown) rotatably mounted around the shaft 4 at, or very close to, the point at which said shaft 4 protrudes from the body or casing of the motor 1. The spring 7 is rotatable with the shaft 4 and the drive cone 5 and its strength is such that it tends to maintain the cone 5 in the position shown in Figs. 1 and 3 of the drawings at which it is in engagement with a stop (not visible) at the end of the shaft 4 which is furthest from the casing or body of the motor 1. However, the spring 7 can readily be compressed to allow the drive cone 5 to move along and around the shaft 4 towards the casing or body of the motor 1, the precise strength of the spring 7 that is required in any particular case being dependent upon the output power of the motor 1 and the construction and weight of the particular bicycle or other vehicle with which it is to be used. The direction of winding of the helical splines or keys is, of course, such that, upon increased resistance to rotation of the shaft 4 and cone 5, the cone 5 can turn around the shaft 4 in a direction opposite to the direction of driving rotation of that shaft.

Although the employment of the single helical compression spring 7 will usually be the simplest and most convenient arrangement, it is within the scope of the invention to use other resilient means to tend to maintain the drive cone 5 in the position shown in Figs. 1 and 3 of the drawings. For example, if the shaft 4 were to be hollow, it could contain a pneumatic piston or compression spring.

The casing or body of the motor 1 carries a projecting lug 8 which is shown only diagrammatically and which could, of course, be replaced by two or more lugs or by a bracket or the like, the single lug 8 that is illustrated, or any equivalent arrangement, being turnable about a pivot 9, defining an axis that is parallel to that of the shaft 4, relative to at least one bracket or lug (not shown) carried by part of the bicycle. If the illustrated wheel 2 is a front wheel of the bicycle, then said at least one bracket or lug of the bicycle will be rigid, and therefore turnable, with the front forks of that bicycle. A tension spring 10 interconnects an anchorage 11 on the casing or body of the motor 1 that is well spaced from the pivot 9 and a further anchorage (not shown) carried by the front forks or some other part of the bicycle, this further anchorage being, if desired, adjustable in position to some extent so as to be able to vary the effect of the spring 10.

As can be seen best in Fig.2 of the drawings, the spring 10 acts to turn the motor 1, together with the shaft 4 and drive cone 5, about the pivot 9 to a position in which the drive cone 5 is in lateral engagement with one side wall of the pneumatic tyre 3. It will also be noted from Fig. 2 of the drawings that the direction of driven rotation of the shaft 4 and cone 5 is such as to tend bodily to displace those parts, and the motor 1, about the pivot 9 in the same direction as does the tension spring 10 with the result that, upon increasing resistance to rotation of the wheel 2, the driven rotation of the cone 5 tends to reinforce its engagement with the tyre 3 rather than to tend to cause disengagement. Preferably, the external surface of the drive cone 5 is ribbed as shown in Figs. 1 and 3 of the drawings and these ribs co-operate drivingly with the side wall of the pneumatic tyre 3 which side wall tends resiliently to adopt a profile matching that of the cone 5 when it is contacted by the latter.

In the use of the equipment that has been described with reference to Figs. 1 to 3 of the drawings in principally driving a bicycle, or at least greatly assisting the drive thereof, the motor 1 is controlled by _ der so that the speed of rotation of its output shaft 4 causes the drive cone 5 to revolve the wheel 2 at a desired speed by driving engagement of the cone 5 with the side wall of the tyre 3. Under normal riding conditions, when proceeding along a more or less horizontal road at a speed of, say, 30 kilometers per hour, the drive cone 5 will occupy substantially the illustrated axial position on the shaft 4 in which a location at, or close to, the larger diameter base end thereof actually engages the side wall of the tyre 3 and this may be considered as being a "high gear" position. However, should the bicycle move onto a length of road with an upwardly sloping gradient, a force that will depend upon the angle of the slope and the weight of the bicycle and its rider will resist rotation of the wheel 2 in the indicated direction so that the power output of the motor 1 would have to become correspondingly greater to continue revolving the shaft 4 at the same speed. What, in fact, occurs is that the increased resistance to rotation of the shaft 4 causes the drive cone 5 to move along the shaft 4 towards the body or casing of the motor 1 against the resistance of the spring 7, or equivalent resilient means, the spring 7 being compressed. A smaller diameter region of the drive cone 5 thus comes into driving engagement with the side wall of the tyre 3, the whole assembly turning through a few degrees about the pivot 9 due principally to the torque reaction between the cone 5 and the tyre 3, the spring 10 acting to maintain this engagement when the torque reaction is very low or absent.  The number of revolutions of the output shaft 4 and drive cone 5 for each revolution of the wheel 2 is thus automatically increased until, if the gradient is sufficiently steep, the truncated smaller diameter end of the cone 5 makes driving engagement with the side wall of the tyre 3 at which time the spring 7 cannot be further compressed.  This may be considered as being the "low gear" condition of the drive and it will readily be apparent that the change between "high gear" and "low gear" takes place entirely automatically and that any transmission ratio somewhere between the "high gear" and "low gear" conditions will also automatically be reached.

Once the bicycle again reaches a level stretch of road or a length of road whose gradient slopes downwardly, the increased resistance to rotation of the wheel 2 is no longer apparent and the compression spring 7 progressively expands and moves the cone 5 back towards the illustrated "high gear" position.

The whole assembly 1, 4, 5 turns back through the previously mentioned small angle about the pivot 9 against the action of the tension spring 10 to accommodate the increased distance of the shaft 4 from the side wall of the tyre 3 that is due to the enlarged diameter of the portion of the cone 5 that makes driving engagement with the side wall of the tyre 3.  The transmission ratio is automatically and infinitely variable between the limits that are dictated by the diameters of the larger and smaller ends of the truncated drive cone 5, no action whatsoever being necessary by the rider of the bicycle to change the transmission ratio.

It will immediately be apparent that the automatic variation in transmission ratio is useful not only when the bicycle is to be ridden up a hill but at times when, for example, it is accelerating from rest to its normal speed of travel or when it is being ridden over soft sand, mud or the like that will have a dragging effect upon the tyre 3 thus causing increased resistance to rotation of the shaft 4. The assembly 1,4,5 could, of course, equally well drive the rear wheel of a bicycle rather than the front wheel thereof. Only some differences in the mounting of the assembly on the bicycle frame and/or auxiliary members is required.

Although the invention has been described in relation to a bicycle, it is emphasized that it is equally applicable to other wheeled vehicles such as, purely for example, tricycles, pedestrian-controlled wheeled vehicles and to light four or more-wheeled vehicles in which case, however, two separate assemblies 1,4,5 might be necessary, the motors 1 of the two assemblies normally being controlled in common. In the event that two drive assemblies are arranged to drive the two rear wheels of a three or four wheeled vehicle, the load sensing characteristics of each assembly allow one wheel to rotate at a different speed to the other as the vehicle turns through a bend in the road.

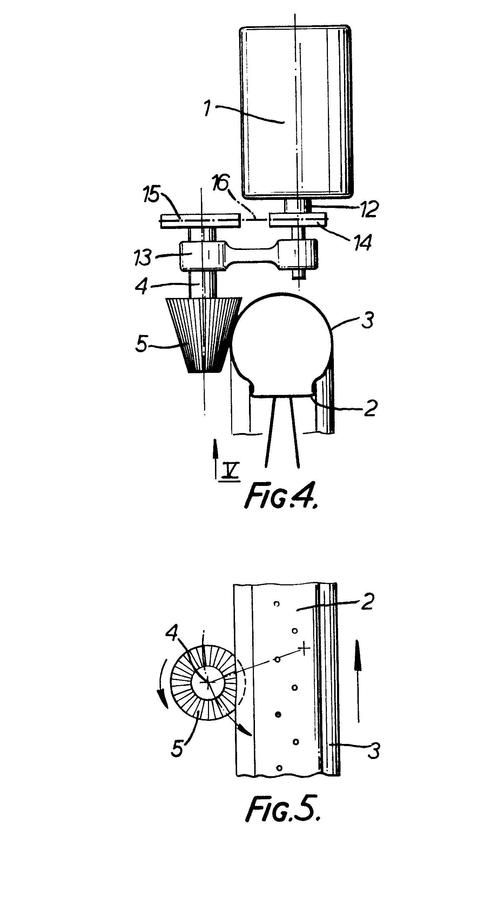

Figs. 4 and 5 of the drawings illustrate an alternative embodiment in which, however, several parts are similar or identical to parts that have already been described, such parts being indicated by the same references as are employed in Figs. 1 to 3 of the drawings so that a full description thereof need not be repeated.

In this embodiment, the motor 1 is secured in any convenient manner which is not illustrated to part of the frame of the bicycle or directly to the steerable front forks thereof depending upon whether it is the rear wheel or the front wheel of the bicycle that is to be power-rotated by the motor 1.

The motor has a rotary output shaft 12 that is horizontally or substantially horizontally disposed and which shaft 12 protrudes from the body or casing of the motor 1 by a significant distance towards the tread of the pneumatic tyre 3 of the wheel 2 concerned. A radius arm 13 has one end turnably mounted on the output shaft 12 of the motor 1 by way of at least one substantially horizontal ball or other bearing (not shown), the opposite and outer end of the radius arm 13 carrying at least one second ball or other bearing in which the previously mentioned shaft 4 is rotatably mounted, said shaft 4 carrying the drive cone 5 at one end in such a way that said drive cone 5 can be displaced lengthwise of the shaft 4 against the action of a spring equivalent to the previously described spring 7 or the action of some other resilient means. The exterior of the shaft 4 and the interior of the bore through the drive cone 5 are matchingly helically splined or keyed as described above in connection with the embodiment of Figs.1 to 3 of the drawings.

The end of the shaft 4 which is at the opposite side of the radius arm 13 from the drive cone 5 is in driven connection with the output shaft 12 of the motor 1 by way of corresponding sprocket wheels and an inter-connecting transmission chain, a pair of pulleys and an inter-connecting toothed belt or, as an alternative, a train of toothed pinions contained within a pivotable casing. Fig.4 diagrammatically illustrates the provision of two pulleys 14 and 15 and an inter-connecting toothed belt 16 and it will be noted that the diameter of the pulley 14 carried by the shaft 12 is smaller than that of the pulley 15 carried by the shaft 4. This arrangement enables the shaft 4 to be rotated at a slower speed than the shaft 12, it only being necessary to choose pulleys 14 and 15 of appropriate relative sizes to obtain any desired fixed transmission ratio between the driving shaft 12 and the driven shaft 4.

The shaft 4 is rotatably mounted in the bearing or bearings carried by the radius arm 13 in such a way as to be freely rotatable, but substantially axially immovable, in the or each such bearing. Spring means (not shown) equivalent to the tension spring 10 extends between an anchorage on the radius arm 13 that is spaced from the shaft 12 and an anchorage on the frame or a steerable portion of the bicycle, this latter anchorage being adjustable in position, if desired, to enable the initial effect of the spring means to be varied. Thus, the shaft 4, the drive cone 5, the radius arm 13 and the pulley 15 tend to be turned by this spring means pivotally about the axis of the shaft 12 in the direction which is indicated by a broken arrow in Fig.5 of the drawings which direction is such as to urge the drive cone 5 into engagement with one side wall of the pneumatic tyre 3. If the assembly 4,5,13 is appropriately positioned, gravity alone will be sufficient to tend to maintain the cone 5 in engagement with the tyre 3 and the spring means may be omitted.

As in the first embodiment, the axis of rotation of the shaft 4 is located rearwardly of the axis of pivotable displacement (the longitudinal axis of the shaft 12) with respect to the intended direction of forward rotation of the wheel 2 so that, when the cone 5 is rotating the wheel 2 by contact with the tyre 3, the torque reaction when resistance to rotation of the wheel 2 increases will tend to reinforce the driving contact rather than to diminish it.

The embodiment of Figs.4 and 5 of the drawings can sometimes be more advantageous when installation space is limited and is to be preferred when the wheel 2 that is to be driven has its axle resiliently supported. In such circumstances, the resilient upward and downward movements of the wheel can adversely affect the automatic variation in transmission ratio that is brought about by axial displacement of the drive cone 5 along and around the shaft 4 unless the cone 5 and shaft 4 are themselves displaceable with said axle. Such an arrangement is more easily brought about with the substantially horizontal axis of driving rotation of the embodiment of Figs. 4 and 5 of the drawings than it is with the substantially vertical axis of driving rotation of the embodiment of Figs. 1 to 3.

In an embodiment which is not illustrated in which embodiment the bicycle or other vehicle wheel 2 is resiliently suspended, a radius arm is fixedly secured to the motor 1 and the motor 1 itself is mounted so as to be pivotable relative to the vehicle frame or to a steerable portion of the vehicle about an axis that preferably contains the centre of gravity of the motor and radius arm.

Instead of, or in addition to, the previously mentioned centrifugally operated clutch mechanism, simple means which is not illustrated in the drawings may be provided to maintain the drive cone 5 out of driving contact with the tyre 3 whenever required. Such means might, for example, be a spring-loaded manually withdrawable locking pin that can be engaged when the spring 10 of the first embodiment, or an equivalent spring in the other embodiments, is fully stretched with the motor 1 and the parts which it carries turned around the pivot 9 or the motor output shaft 12 so far that the drive cone 5 is spaced a short distance laterally away from the side wall of the tyre 3. When the clutch is omitted, the motor 1 may be started by manually rotating the shaft 4, using the rotation of the wheel 2 for this purpose. When the bicycle is temporarily stopped, a Bowden cable or other means may be employed to turn the cone 5, and the parts by which it is driven, bodily out of engagement with the tyre 3 against the action of the spring 10 or other equivalent spring. This prevents an internal combustion motor 1 from being "stalled" at, for example, traffic lights.

In a further embodiment that is not illustrated, the drive cone 5 makes driving contact, during use, with a member coupled to the wheel 2 instead of with the tyre 3. This member could, purely for example, be an annular disc fixedly coupled to the spokes of the wheel 2 and having a diameter which is considerably less than that of the wheel 2, for example, only two-thirds of the latter. In vehicles other than bicycles, this member could be indirectly coupled to at least one ground wheel, the coupling incorporating a fixed or variable ratio gear if so required.

CLAIMS

1. A land vehicle drive of the kind in which a motor (1) carried by a vehicle to which the drive is fitted is operatively connected to a conically shaped drive member (5) that makes contact, at least during use, with a tyre (3) on a ground wheel (2) of that vehicle or with a member coupled to that ground wheel, characterised in that said conically shaped drive member (5) is displaceable along a drive shaft (4) by which it is supported, against the opposition of resilient means (7), in such a way that the position of said drive member (5) lengthwise along said drive shaft (4) at any instant during operation determines the transmission ratio between that drive member (5) and said vehicle ground wheel (2) and is dependent upon the resistance to rotation of that drive shaft (4) at substantially the same instant.

2. A land vehicle drive according to Claim 1, characterised in that said drive shaft is helically splined or keyed and that said conically shaped drive member (5) surrounds that drive shaft (4) by way of an axial bore (6) that is splined or keyed to match, and co-operate with, the splines or key(s) on the drive shaft (4).

3. A land vehicle drive according to Claim 1 or 2, characterised in that the resilient means is afforded by at least one spring which surrounds the drive shaft (4) and which bears between the larger diameter end of the conically shaped drive member (5) and a collar or the like that is mounted on the drive shaft (4) so as to be rotatable, but substantially axially immovable, relative thereto.

4. A land vehicle drive according to any preceding claim, characterised in that spring means (10) is arranged to urge the conically shaped driving member (5) into engagement with said tyre (3) or with the member that is coupled to said wheel (2) in the use of the drive.

5. A land vehicle drive according to any preceding Claim, characterised in that an axis (9,12) about which the conically shaped driving member (5) is pivotally bodily displaceable is disposed in advance of the axis of rotation of the drive shaft (4) relative to the intended direction of rotation of said ground wheel (2) so that, when the conically shaped driving member (5) is rotating the ground wheel (2) by contact with the tyre (3) or with said member that is coupled to the wheel (2), the torque reaction when resistance to rotation of the ground wheel (2) increases will tend to reinforce that driving contact.

6. A land vehicle drive according to any preceding claim, characterised in that said motor (1) is an internal combustion engine.

7. A land vehicle drive according to any one of Claims 1 to 5, characterised in that said motor (1) is an electric motor.

8. A land vehicle drive according to any preceding claim, characterised in that said drive shaft (4) is separate from, but substantially parallel to, a rotary output shaft (12) of said motor (1), said shafts (4,12) being drivingly interconnected by pulleys (14,15) and a toothed belt (16), sprocket wheels and a transmission chain or a train of toothed pinions, and characterised in that the drive shaft (4) is bodily angularly displaceable relative to said motor output shaft (12) about an axis coincident with that of the motor output shaft (12).

9. A land vehicle drive according to any preceding claim, characterised in that the external driving surface of said conically shaped driving member (5) is ribbed.

10. A bicycle or other land vehicle characterised in that it is provided with a drive according to any one of Claims 1 to 9.

0145431

Fig.I.

Fig.2.

Fig.3.

Fig.4.

Fig.5.